# EUROPÄISCHE PATENTSCHRIFT

(11) **EP 1 210 894 B1**
(45) Veröffentlichungstag und Bekanntmachung des Hinweises auf die Patenterteilung: **17.09.2003**
(21) Anmeldenummer: 01127344.8
(22) Anmeldetag: 20.11.2001
(51) Int. Cl.: A47J 31/60

(54) **Getränkemaschine**
Beverage machine
Machine à boissons

(30) Priorität: 29.11.2000 DE 10059183
(43) Veröffentlichungstag der Anmeldung: 05.06.2002
(73) Patentinhaber: WMF WÜRTTEMBERGISCHE METALLWARENFABRIK AG, 73309 Geislingen/Steige (DE)
(72) Erfinder: Geiger, Rudi, Dipl.-Ing. FH, 73111 Lauterstein-Weissenstein (DE); Nagel, Günther., 73072 Donzdorf (DE); Bauer, Ewald., 83312 Geislingen/Steige-Weiler (DE); Pulvermüller, Peter., 73342 Bad Ditzenbach (DE)
(74) Vertreter: Grünecker, Kinkeldey, Stockmair & Schwanhäusser Anwaltssozietät

(56) Entgegenhaltungen:
- CH-A- 665 945
- US-A- 5 297 596
- US-A- 5 375 744

## Beschreibung

Die Erfindung bezieht sich auf eine Getränkemaschine, insbesondere eine Kaffeemaschine, der im Oberbegriff von Anspruch 1 erläuterten Art.

Beim Reinigen von Getränkemaschinen für die gewerbliche Nutzung müssen strenge Sicherheitsauflagen erfüllt werden, um sicherzustellen, dass kein Reinigungsmittel in der Maschine verbleibt und in das nachfolgend ausgegebene Getränk gelangt. Insbesondere muss die Dosierung des Reinigungsmittels genau eingehalten werden, und es sollten Reinigungsmittel verwendet werden, die möglichst wenig umweltbelastend oder gar gesundheitsschädigend sind. Flüssige Reinigungsmittel lassen sich gut dosieren und sind auch bei einer selbsttätigen Eingabe gut handhabbar. Sie enthalten jedoch Chlor und sind deshalb ökologisch bedenklich. Reinigungsmittel in fester Form werden bisher nur per Hand dosiert, entweder in Pulverform mit Messbecher oder gepresst als Tablette, da man bisher der Meinung war, diese festen Reinigungsmittel wegen ihrer stark hygroskopischen Wirkung nicht anders dosieren zu können. Feste Reinigungsmittel in Form von Pulver oder Tabletten haben Vorteile im Hinblick auf ihre Reinigungswirkung, da sie durch einen gewissen Sauerstoffanteil zu einem Sprudeleffekt und somit zu einer mechanischen Reinigung führen, und sie haben Vorteile im Hinblick auf ihre Umweltverträglichkeit und ihrem Schadstoffgehalt.

Die US 5 297 596 beschreibt eine mit einer Getränkemaschine kombinierbare Ausgabeeinrichtung für das kontrollierte Ausgeben und Einleiten eines Reinigungsmaterials in eine Brühkammer der Getränkemaschine. Die Eingabeeinrichtung enthält einen Trichter, der schwenkbar an einer Eingabeöffnung der Brüheinrichtung angeordnet ist, und muss manuell betätigt werden. Eine Dosiereinrichtung ist nicht vorgesehen; und das Eingeben des Reinigungsmittels muss manuell erfolgen.

Der Erfindung liegt somit die Aufgabe zugrunde, eine Getränkemaschine bereitzustellen, die auf einfache und problemlose Weise mit festen Reinigungsmitteln gereinigt werden kann.

Die Aufgabe wird durch die im Anspruch 1 angegebenen Merkmale gelöst.

Durch die erfindungsgemäß vorgesehene, in sich geschlossene Dosiereinrichtung können auch feste Reinigungsmittel, insbesondere wenn sie in Presskörperform, wie beispielsweise in Granulatform oder in Form kleiner Tabletten vorliegen, sicher und korrekt dosiert werden, ohne dass die hygroskopischen Eigenschaften derartiger Reinigungsmittel zu Problemen führen.

Eine besonders einfache und zweckmäßige Dosierung wird durch die in Anspruch 2 angegebene, bewegbare Dosierkammer erreicht, die als Transportvorrichtung für eine vorbestimmte Menge Reinigungsmittel aus dem Vorratsbehälter in den Auslauf dient.

Der in Anspruch 3 vorgesehene Sensor erhöht die Sicherheit und kann zum Steuern der Dosiereinrichtung verwendet werden.

Durch die Absperrvorrichtung nach Anspruch 4 wird eine weitere Sicherung gegen ein unerwünschtes Fördern von Reinigungsmittel erreicht.

Durch die Anordnung der Absperrvorrichtung gemäß Anspruch 5 in Fließrichtung des Reinigungsmittels nach dem Sensor kann die Absperrvorrichtung durch den Sensor zur weiteren Erhöhung der Sicherheit betätigt werden.

Von besonderem Vorteil sind die konstruktiven Ausgestaltungen der Ansprüche 6 bis 11, die besonders an die Dosierung von festem Reinigungsmittel in Granulatform angepasst sind. Es wurde festgestellt, dass es mit dem beschriebenen Dosierrad möglich ist, auch stark hygroskopische Granulatkörner korrekt zu dosieren und sicher zu fördern, ohne dass es zu Verklumpungen und Verstopfungen kommt.

Die teilbare Ausgestaltung nach Anspruch 12 erleichtert die Reinigung der Dosiereinrichtung ohne ihre Abgeschlossenheit zu beeinträchtigen.

Die Ansprüche 13 bis 15 bilden eine weitere Sicherung gegen Fehlfunktionen.

Ein Ausführungsbeispiel der Erfindung wird nachfolgend anhand der Zeichnungen näher erläutert. Es zeigen:
- Fig.1: einen Längsschnitt durch eine erfindungsgemäße Dosiereinrichtung in schematischer, auseinandergezogener Darstellung,
- Fig. 2: die Ansicht II-II aus Fig. 1, und
- Fig. 3: eine vergrößerte Detailansicht aus Fig. 1.

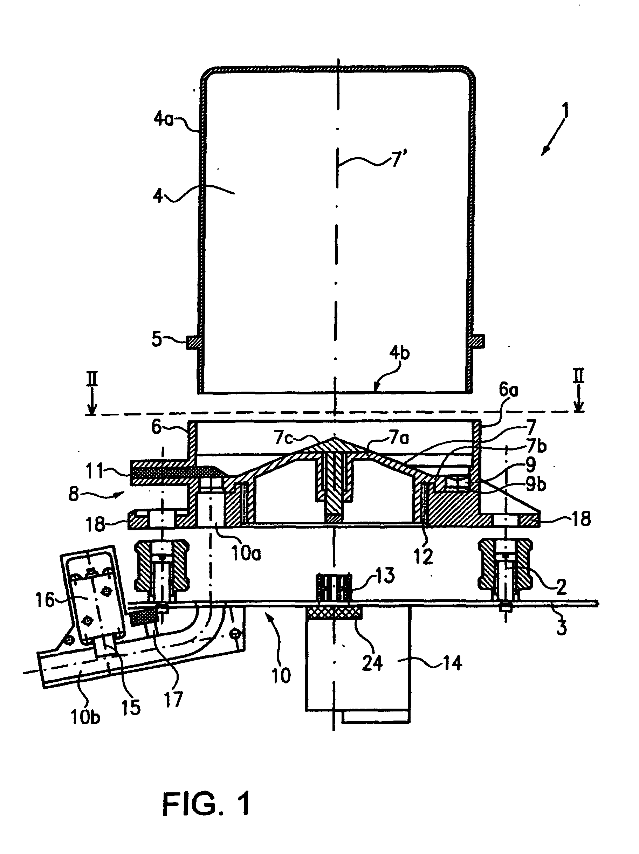

Fig. 1 zeigt eine Dosiereinrichtung 1, die über eine Verbindungseinrichtung 2, dargestellt sind Schrauben, und einem Träger 3 mit einer nicht näher dargestellten Getränkemaschine, insbesondere einer üblichen, gewerblich nutzbaren und vorzugsweise automatisch bzw. halbautomatisch arbeitenden Kaffee- und Teemaschine, verbunden werden kann. Im dargestellten Ausführungsbeispiel ist die Dosiereinrichtung 1 fest in die Getränkemaschine integriert; sie kann jedoch auch, beispielsweise ebenfalls über die Schrauben 2 und ihren eigenen Träger 3 zum Nachrüsten an der Getränkemaschine nachträglich befestigt werden.

Die Dosiereinrichtung 1 enthält einen Vorratsbehälter 4 mit einer dosenförmigen, geschlossenen Wandung 4a und einer Verbindungseinrichtung 5 in der Nähe einer Öffnung 4b, mit der der Vorratsbehälter 4 an einem Unterteil 6 lösbar befestigt werden kann. Die Verbindungseinrichtung 5 kann beispielsweise ein Gewinde oder ein Bajonettverschluss sein.

Das Unterteil 6 enthält ein im Wesentlichen napfförmiges, zylindrisches Gehäuse 6a, das in seinem oberen Bereich die Verbindungseinrichtung 5 des Vorratsbehälters 4 aufnimmt und in dessen unterem Bereich ein Dosierrad 7 einer insgesamt mit 8 bezeichneten Dosiereinheit angeordnet ist. Das Dosierrad 7 ist um seine Achse T drehbar, erstreckt sich über die gesamte untere Begrenzung des zylindrischen Gehäuses 6a und bildet somit den Boden des Vorratsbehälters 4, wenn dieser mit dem Unterteil 6 verbunden ist.

Das Dosierrad 7 weist einen kegelförmigen, strömungsteilenden Mittelteil 7a mit einer getrennten Kegelspitze 7c und einen im Wesentlichen radial verlaufenden Umfangsflansch 7b auf. Der Umfangsflansch 7b ist mit einer Vielzahl in Umfangsrichtung verteilt angeordneter als Dosierkammem ausgebildeter Durchgangsöffnungen 9 versehen, die sich in Schwerkraftrichtung senkrecht durch das Dosierrad 7 erstrecken.

An einer Stelle des Bodens des napfförmigen Gehäuses 6a ist eine Auslassöffnung 10a eines insgesamt mit 10 bezeichneten Auslaufs angeordnet. Die Auslassöffnung 10a befindet sich an einer Stelle, an der die Auslassöffnung 10a mit jeder Durchgangsöffnung 9 fluchten kann, wenn sich das Dosierrad 7 dreht. Oberhalb der Auslassöffnung 10a und oberhalb des Dosierrades 7 ist ein Abstreifer 11 vorgesehen, der einerseits zumindest diejenige Durchgangsöffnung 9, die sich gerade in fluchtender Ausrichtung mit der Auslassöffnung 10a befindet, gegen das aus dem Vorratsbehälter 4 nachdrückende Reinigungsmittel und andererseits den Vorratsbehälter 4 gegen feuchte Luft bzw. Wasserdampf aus dem Auslauf 10 abschirmt.

Das Dosierrad 7 ist im Boden des zylindrischen Gehäuses 6a des Unterteils 6 drehbar gelagert und an seinem Umfang mit Getriebezähnen 12 versehen, die in ein Getriebezahnrad 13 eingreifen, das durch einen Motor 14 angetrieben wird.

Der Motor 14 und das Getriebezahnrad 13 sind am Träger 3 befestigt, so dass das Unterteil 6 mit den mechanischen Bestandteilen der Dosiereinheit 8 vom Antrieb gelöst und gereinigt werden kann.

Ebenfalls am Träger 3 ist eine Auslaufleitung 10b des Auslaufs befestigt, die mit der Auslassöffnung 10a fluchtend ausgerichtet ist, wenn das Unterteil 6 am Träger 3 befestigt ist. In der Auslaufleitung 10b ist eine Absperreinrichtung 15 vorgesehen, die durch einen Hubmagneten 16 so betätigt werden kann, dass sie wahlweise die Auslaufleitung 10b absperrt oder freigibt. Zwischen der Absperreinrichtung 15 und dem Dosierrad 7 ist weiterhin ein Sensor 17 in Form einer Lichtschranke vorgesehen, durch den festgestellt werden kann, ob sich im Auslauf 10, insbesondere in der Auslaufleitung 10b, Reinigungsmittel befindet.

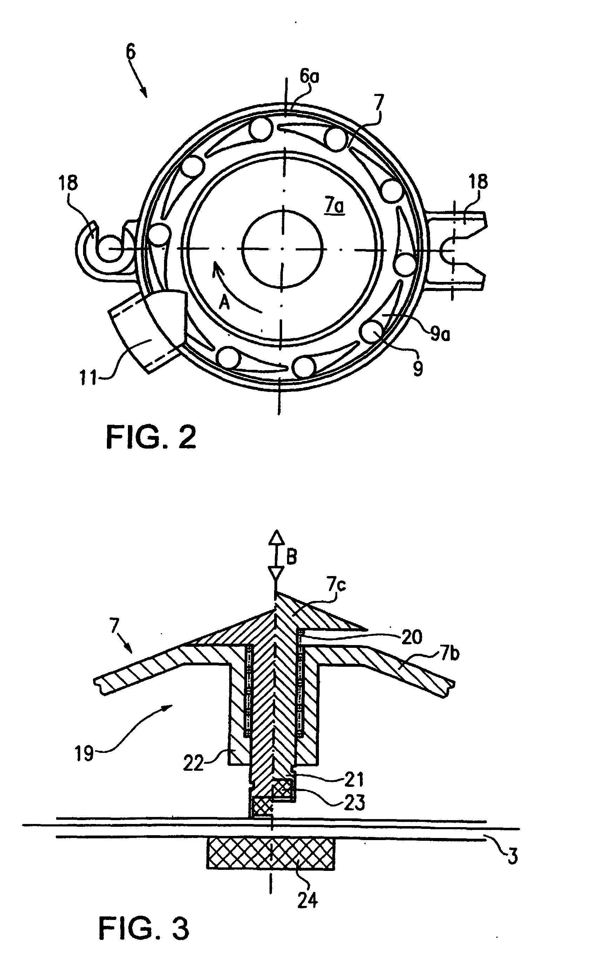

Fig. 2 zeigt eine Draufsicht auf das Unterteil 6 mit dem darin angeordneten Dosierrad 7. Das Dosierrad 7 füllt den Innenraum der zylindrischen Wandung 6a vollständig aus und steht mit der gesamten Querschnittsfläche der Öffnung 4b des Vorratsbehälters 4 in Verbindung. Insbesondere dann, wenn, wie erfindungsgemäß besonders bevorzugt, ein festes Reinigungsmittel in Granulatform, d.h. in Form von Presskörpem einer bestimmten, relativ geringen aber in sich im Wesentlichen einheitlichen Größe, verwendet wird, haben die als Dosierkammem wirkenden Durchtrittsöffnungen 9 eine Größe, die so bemessen ist, dass sie das Granulat vereinzeln, d.h. nur ein Granulatkom aufnehmen können. Jede Durchtrittsöffnung 9 ist an der dem Vorratsbehälter 4 zugewandten und der Antriebsrichtung A nachlaufenden Seite mit einer sich nach hinten verschmälemden und verflachenden Abweisausnehmung 9a versehen, die das Abstreifen überschüssiger Granulatkömer durch den Abstreifer 11 erleichtert und vor allen Dingen sicherstellt, dass die Granulatkömer möglichst nicht zerrieben werden, was die Dosiermenge verändern würde. Aus dem gleichen Grund sind die Durchgangsöffnungen 9 an der der Auslauföffnung 10a zugewandten Seite mit einer Anfasung 9b versehen (Fig. 1).

In Fig. 2 sind weiterhin Befestigungsösen 18 ersichtlich, mit denen das Unterteil 6 über die Schrauben 2 mit dem Träger 3 lösbar zu verbinden ist.

Fig. 3 zeigt in vergrößerter Darstellung eine insgesamt mit 19 bezeichnete Einrichtung zum Feststellen des Füllzustandes an Reinigungsmittel im Vorratsbehälter 4. Die Einrichtung 19 enthält die abgetrennte Kegelspitze 7c des Dosierrades 7, die durch eine Feder 20 in Richtung auf den Vorratsbehälter belastet wird. Die Kraft der Feder 20 ist so bemessen, dass sie durch das Gewicht des Reinigungsmittel im Vorratsbehälter 4 komprimiert wird; und zwar so lange, solange sich noch genügend Reinigungsmittel im Vorratsbehälter 4 befindet Die Feder 20 wird somit die Kegelspitze 7c erst dann in Richtung des Pfeiles B nach oben schieben, wenn das Reinigungsmittel im Vorratsbehälter 4 zur Neige geht.

Die Kegelspitze 7c ist über einen Schaft 21 in einer Führungsbuchse 22 des Dosierrades 7 geführt, in der auch die Feder 20 untergebracht ist, wobei der Schaft 21 nach unten bis zum Träger 3 reicht, wenn die Kegelspitze 7c durch das Gewicht des Reinigungsmittels im Vorratsbehälter 4 auf das Dosierrad 7 gedrückt wird. Das sich dann in der Nähe des Trägers befindende, untere Ende des Schaftes 21 ist mit einem Magneten 23 versehen, der mit einem Reedschalter 24 zusammenwirkt, der am Träger 3 befestigt ist. Sobald die Feder 20 in der Lage ist, das Gewicht des eventuell noch verbleibenden Reinigungsmittels im Vorratsbehälter 4 zu überwinden, bewegt sich der Magnet 23 aus dem Einflussbereich des Reedschalters 24 heraus, was entweder für einen Alarm und/oder eine Anzeige benutzt werden kann, dass Reinigungsmittel nachgefüllt werden muss, und/oder bewirkt, dass zukünftige Reinigungsvorgänge gesperrt werden. Durch die kegelförmige Ausgestaltung des Dosierrades 7, wobei die mit dem Reedschalter 24 zusammenwirkende Kegelspitze 7c den höchsten Punkt darstellt, wird sichergestellt, dass sich im Bereich der Durchgangsbohrungen 9 noch genügend Reinigungsmittel befindet, damit ein eventuell gerade laufender Reinigungsvorgang beendet werden kann.

Beim Betrieb der erfindungsgemäßen Dosiereinrichtung 1 wird zunächst der mit festem Reinigungsmittel in Granulatform gefüllte Vorratsbehälter 4, der auch das Unterteil einer Verkaufsdose für das Reinigungsmittel sein kann, über die Verbindungseinrichtung 5, die beispielsweise das Deckelgewinde dieser Verkaufsverpackung sein kann, mit dem Unterteil 6 verbunden. Bevorzugt wird Granulat in Walzenform, angenäherter Kugel- oder Walzenform oder anderen leicht dosier- und transportierbaren Formen. Dann wird die Einheit aus Vorratsbehälter 4 und Unterteil 6 Überkopf mit Hilfe der Schrauben 2 am Träger 3 befestigt, an dem sich bereits das Getriebe 13, der Motor 14, der Reedschalter 24, die Auslaufleitung 10b, die Absperreinrichtung 15, der Hubmagnet 16 und die Lichtschranke 17 befindet, befestigt. Die elektrischen Verbindungen zur Steuerung der Getränkemaschine können durch jeden Fachmann vorgenommen werden und müssen hier nicht besonders erläutert werden.

Soll nun ein Reinigungsvorgang eingeleitet werden, so wird der Motor 14 in Gang gesetzt und dreht das Dosierrad 7 so lange, bis eine vorbestimmte Anzahl von Durchgangsbohrungen 9 die Auslauföffnung 10a passiert hat. Wird durch die Lichtschranke 17 festgestellt, dass Granulat gefördert wird, der Vorratsbehälter 4 demnach voll ist, so wird der Hubmagnet 16 betätigt, so dass die Absperrvorrichtung 15 die Auslaufleitung 10b öffnet. Das Granulat rutscht durch und wird entweder, je nach Anordnung der Dosiereinrichtung 1, per Schwerkraft in den Reinigungsstrom eingeleitet oder es sind stromabwärts in der Auslaufleitung 10b Anschlüsse für Druckluft oder Wasser vorgesehen, die das Granulat auch entgegen der Schwerkraft an die vorbestimmte Stelle fördern.

Da das Dosierrad 7 die Granulatkömer entsprechend dem Umfangsabstand der Durchgangsöffnungen 9 mit Abstand in den Auslauf 10 entlässt, kann durch den Sensor 17 auch eine Granulatkornzählung vorgenommen werden, was eine weitere Sicherung gegen Überdosierung bewirkt.

Hat der Motor 14 die vorbestimmte Umdrehung für eine korrekte Dosierung zurückgelegt und/oder hat der Sensor 17 die vorbestimmte Anzahl Granulatkörner festgestellt, wird der Motor 14 gestoppt und die Absperreinheit 15 geschlossen. Der Hubmagnet 16 wird stromlos, so dass auch dadurch eine Sicherung gegen Fehlfunktion bewirkt wird.

Der Sensor 17 bleibt jedoch aktiviert. Sollte durch den Sensor 17 die Anwesenheit von Granulat im Auslauf 10 festgestellt werden, während ein Zubereitungszyklus für ein Getrankt läuft, so wird durch den Sensor 17 dieser Zubereitungszyklus gestoppt, so dass sichergestellt wird, dass kein Reinigungsmittel in das Getränk gelangt.

Geht das Reinigungsmittel zur Neige, wird die Kegelspitze 7c durch die Feder 20 angehoben und es erfolgt eine Anzeige, dass Reinigungsmittel nachgefüllt werden muss.

In Abwandlung des beschriebenen und gezeichneten Ausführungsbeispieles kann beispielsweise statt der Lochscheibe ein Zellrad oder dgl. verwendet werden. Es ist weiterhin möglich, nur eine einzige Dosierkammer vorzusehen, die sich zwischen dem Vorratsbehälter und dem Auslauf bewegt. Bei Verwendung einer Lochscheibe kann der Abstreifer auch mehrere Dosierkammern überdecken, wobei nur eine einzige Dosierkammer mit dem Vorratsbehälter in Verbindung stehen muss. Die Dosiereinrichtung kann auch einstückig ausgebildet und der Vorratsbehälter über einen Deckel befüllbar sein.

## Patentansprüche

1. Getränkemaschine, insbesondere Kaffeemaschine, mit einer Eintragseinrichtung für festes Reinigungsmittel, insbesondere in Presskörperform, **gekennzeichnet durch** eine selbsttätig dosierende, in sich geschlossene Dosiereinrichtung (1) für das Reinigungsmittel, die einen Auslauf (10), einen gegen den Auslauf (10) abgeschirmten Vorratsbehälter (4) und eine Dosiereinheit (8) umfasst.

2. Getränkemaschine nach Anspruch 1, **dadurch gekennzeichnet, dass** die Dosiereinheit (8) wenigstens eine bewegbare Dosierkammer (9) enthält, durch die eine vorbestimmte Menge Reinigungsmittel aus dem Vorratsbehälter (4) in den Auslauf (10) förderbar ist.

3. Getränkemaschine nach Anspruch 1 oder 2, **dadurch gekennzeichnet, dass** die Dosiereinheit (8) einen im Auslauf (10) angeordneten Sensor (17) zum Feststellen der An- und/oder Abwesenheit von Reinigungsmittel enthält.

4. Getränkemaschine nach einem der Ansprüche 1 bis 3, **dadurch gekennzeichnet, dass** die Dosiereinheit (8) eine Absperrvorrichtung (15) für den Auslauf (10) enthält.

5. Getränkemaschine nach Anspruch 3 und 4, **dadurch gekennzeichnet, dass** die Absperrvorrichtung (15) dem Sensor (17) in Fließrichtung nachgeordnet ist.

6. Getränkemaschine nach einem der Ansprüche 1 bis 5, **dadurch gekennzeichnet, dass** die Dosiereinheit ein Dosierrad (7) mit einer Mehrzahl im Abstand zueinander angeordneter Dosierkammem (9) enthält, die nacheinander mit dem Auslauf (10) fluchtend ausrichtbar sind.

7. Getränkemaschine nach Anspruch 6, **dadurch gekennzeichnet, dass** das Dosierrad (7) um eine vertikale Achse antreibbar ist und die in Schwerkraftrichtung untere Begrenzung des Vorratsbehälters (4) enthält, und dass der Auslauf (10) unterhalb des Dosierrades (7) angeordnet ist.

8. Getränkemaschine nach Anspruch 7, **dadurch gekennzeichnet, dass** das Dosierrad (7) als Scheibe und die Dosierkammem (9) als Durchgangsbohrungen durch die Scheibe ausgebildet sind.

9. Getränkemaschine nach einem der Ansprüche 2 bis 8, **dadurch gekennzeichnet, dass** im Bereich über dem Auslauf (10) ein Abstreifer (11) vorgesehen ist, der die mit dem Auslauf (10) fluchtend ausgerichtete Dosierkammer (9) gegen den Vorratsbehälter (4) abschirmt.

10. Getränkemaschine nach einem der Ansprüche 1 bis 9, **gekennzeichnet durch** die Verwendung von Reinigungsmittel in Granulatform.

11. Getränkemaschine nach Anspruch 2 und 10, **dadurch gekennzeichnet, dass** die Dosierkammer (9) zur Aufnahme nur eines Granulatkorns ausgebildet ist.

12. Getränkemaschine nach einem der Ansprüche 1 bis 11, **dadurch gekennzeichnet, dass** die Dosiereinrichtung (1) teilbar ausgebildet ist, wobei der Vorratsbehälter (4) ein von einem Unterteil (6) abnehmbares Gehäuse (4a) umfasst, das Unterteil (6) ein Dosierrad (7) der Dosiereinheit (8) enthält und das Unterteil (6) von einem Träger (3) abnehmbar ist, der den Antrieb (13, 14) des Dosierrades (7) enthält.

13. Getränkemaschine nach einem der Ansprüche 1 bis 12, **gekennzeichnet durch** eine Einrichtung (15, 16, 17) zum Verhindern einer unerwünschten Förderung von Reinigungsmittel.

14. Getränkemaschine nach einem der Ansprüche 1 bis 13, **gekennzeichnet durch** eine Einrichtung (19) zum Feststellen des Füllstandes im Vorratsbehälter (4).

15. Getränkemaschine nach Anspruch 14, **dadurch gekennzeichnet, dass** die Einrichtung (19) ein vom Gewicht des Reinigungsmittels im Vorratsbehälter (4) beaufschlagtes Teil (7c), eine dem Gewicht des Reinigungsmittels entgegenwirkende, das Teil (7c) beaufschlagende Feder (20) sowie eine Schalteinrichtung (23, 24) aufweist, durch die die Bewegung des Teiles (7c) unter Wirkung der Feder (20) feststellbar ist.

## Claims

1. Drinks machine, in particular a coffee machine, with an entry device for solid cleaning agent, in particular in pressed form, **characterized by** an automatically dosing, enclosed dosage device (1) for the cleaning agent, which includes an outlet (10), a storage container (4) shielded from the outlet (10) and a dosage unit (8).

2. Drinks machine according to Claim 1, **characterized in that** the dosage unit (8) contains at least one movable dosage chamber (9) through which a certain predetermined amount of cleaning agent can be fed from the storage container (4) into the outlet (10).

3. Drinks machine according to Claim 1 or 2, **characterized in that** the dosage unit (8) contains a sensor (17) in the outlet (10) for determining the presence and/or absence of cleaning agent.

4. Drinks machine according to one of Claims 1 to 3, **characterized in that** the dosage unit (8) contains a shut-off device (15) for the outlet (10).

5. Drinks machine according to Claims 3 and 4, **characterized in that** the shut-off device (15) is arranged behind the sensor (17) in the direction of flow.

6. Drinks machine according to one of the Claims 1 to 5, **characterized in that** the dosage unit includes a dosage wheel (7) with a plurality of spaced dosage chambers (9) and which can be consecutively aligned flush with the outlet (10).

7. Drinks machine according to Claim 6, **characterized in that** the dosage wheel (7) can be driven about a vertical axis and which includes the lower boundary of the storage container (4) in the direction of gravity and that the outlet (10) is arranged below the dosage wheel (7).

8. Drinks machine according to Claim 7, **characterized in that** the dosage wheel (7) is formed as a disc and the dosage chambers (9) are formed as through-openings through the disc.

9. Drinks machine according to one of the Claims 2 to 8, **characterized in that** a scraper (11) is provided in the region above the outlet (10) to shield the dosage chamber (9) aligned flush with the outlet (10) from the storage container (4).

10. Drinks machine according to one of the Claims 1 to 9, **characterized by** the application of cleaning agent in granular form.

11. Drinks machine according to Claims 2 and 10, **characterized in that** the dosage chamber (9) is formed for only accepting one single granulate grain.

12. Drinks machine according to one of the Claims 1 to 11, **characterized in that** the dosage device (1) can be separated into parts, wherein the storage container (4) consists of a housing (4a) which can be removed from a base section (6), the base section (6) includes a dosage wheel (7) of the dosage unit (8) and the base section (6) can be removed from a support (3) which includes the drive (13, 14) of the dosage wheel (7).

13. Drinks machine according to one of the Claims 1 to 12, **characterized by** means (15, 16, 17) for preventing an unwanted feed of cleaning agent.

14. Drinks machine according to one of the Claims 1 to 13, **characterized by** means for determining the filling level in the storage container (4).

15. Drinks machine according to Claim 14, **characterized in that** the means (19) comprises a member (7c) loaded by the weight of the cleaning agent in the storage container (4), a spring (20) acting against the weight of the cleaning agent and loading the member (7c) and a switching device (23, 24), through which the movement of the member (7c) due to the effect of the spring (20) can be determined.

## Revendications

1. Machine à boissons, en particulier machine à café, comportant un dispositif d'introduction d'un agent de nettoyage solide, en particulier sous forme de corps comprimés, **caractérisée par** un dispositif de dosage (1) fermé et automatique de l'agent de nettoyage qui comprend une évacuation (10), un réservoir (4) isolé par rapport à l'évacuation (10) et une unité de dosage (8).

2. Machine à boissons selon la revendication 1, **caractérisée en ce que** l'unité de dosage (8) contient au moins une chambre de dosage (9) mobile qui permet de transporter une quantité prédéterminée d'agent de nettoyage du réservoir (4) vers l'évacuation (10).

3. Machine à boissons selon la revendication 1 ou 2, **caractérisée en ce que** l'unité de dosage (8) contient un détecteur (17) disposé dans l'évacuation (10) pour détecter la présence et/ou l'absence d'agent de nettoyage.

4. Machine à boissons selon l'une des revendications 1 à 3, **caractérisée en ce que** l'unité de dosage (8) contient un dispositif de blocage (15) de l'évacuation (10).

5. Machine à boissons selon les revendications 3 et 4, **caractérisée en ce que** le dispositif de blocage (15) est monté en aval du détecteur (17) dans la direction d'écoulement.

6. Machine à boissons selon l'une des revendications 1 à 5, **caractérisée en ce que** l'unité de dosage contient une roue de dosage (7) avec une pluralité de chambres de dosage (9) mutuellement espacées qui peuvent être amenées successivement en alignement avec l'évacuation (10).

7. Machine à boissons selon la revendication 6, **caractérisée en ce que** la roue de dosage (7) peut être entraînée autour d'un axe vertical et contient la limite, inférieure dans la direction de la gravité, du réservoir (4), et que l'évacuation (10) est disposée au-dessous de la roue de dosage (7).

8. Machine à boissons selon la revendication 7, **caractérisée en ce que** la roue de dosage (7) est réalisée sous forme de disque et les chambres de dosage (9) sous forme d'orifices de passage à travers le disque.

9. Machine à boissons selon l'une des revendications 2 à 8, **caractérisée en ce que** dans la région située au-dessus de l'évacuation (10), il est prévu une racle (11) qui isole la chambre de dosage (9) alignée avec l'évacuation (10) par rapport au réservoir (4).

10. Machine à boissons selon l'une des revendications 1 à 9, **caractérisée par** l'utilisation d'agent de nettoyage sous forme de granulés.

11. Machine à boissons selon les revendications 2 et 10, **caractérisée en ce que** la chambre de dosage (9) est conçue pour recevoir un seul granulé.

12. Machine à boissons selon l'une des revendications 1 à 11, **caractérisée en ce que** le dispositif de dosage (1) peut être séparé, le réservoir (4) comprenant un boîtier (4a) pouvant être enlevé d'une partie inférieure (6), la partie inférieure (6) contenant une roue de dosage (7) de l'unité de dosage (8) et la partie inférieure (6) pouvant être retirée d'un support (3) qui contient le mécanisme d'entraînement (13, 14) de la roue de dosage (7).

13. Machine à boissons selon l'une des revendications 1 à 12, **caractérisée par** un dispositif (15, 16, 17) pour empêcher un transport indésirable d'agent de nettoyage.

14. Machine à boissons selon l'une des revendications 1 à 13, **caractérisée par** un dispositif (19) destiné à déterminer le niveau de remplissage du réservoir (4).

15. Machine à boissons selon la revendication 14, **caractérisée en ce que** le dispositif (19) présente une pièce (7c) sollicitée par le poids de l'agent de nettoyage dans le réservoir (4), un ressort (20) s'opposant au poids de l'agent de nettoyage et sollicitant la pièce (7c) ainsi qu'un dispositif de commutation (23, 24) permettant de détecter le déplacement de la pièce (7c) sous l'action du ressort (20).
